(19) Europäisches Patentamt
European Patent Office
Office européen des brevets

(11) **EP 2 699 938 B1**

(12) **EUROPÄISCHE PATENTSCHRIFT**

(45) Veröffentlichungstag und Bekanntmachung des Hinweises auf die Patenterteilung:
**02.11.2016 Patentblatt 2016/44**

(21) Anmeldenummer: **11727106.4**

(22) Anmeldetag: **19.04.2011**

(51) Int Cl.:
*G01S 7/40* *(2006.01)*      *G01S 13/32* *(2006.01)*

(86) Internationale Anmeldenummer:
**PCT/DE2011/000430**

(87) Internationale Veröffentlichungsnummer:
**WO 2012/142985 (26.10.2012 Gazette 2012/43)**

(54) **VERFAHREN ZUM BETREIBEN EINES ABSTANDSSENSORS UND VORRICHTUNG ZUR DURCHFÜHRUNG DES VERFAHRENS**

METHOD FOR OPERATING A DISTANCE SENSOR AND DEVICE FOR PERFORMING THE METHOD

PROCÉDÉ PERMETTANT DE FAIRE FONCTIONNER UN CAPTEUR DE DISTANCE, ET DISPOSITIF DESTINÉ À RÉALISER CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.02.2014 Patentblatt 2014/09**

(73) Patentinhaber: **Balluff GmbH**
**73765 Neuhausen/Filder (DE)**

(72) Erfinder:
• **FERICEAN, Sorin**
**71229 Leonberg (DE)**
• **OSTERFELD, Martin**
**72667 Schlaitdorf (DE)**

(74) Vertreter: **Jakelski & Althoff**
**Patentanwälte PartG mbB**
**Patentanwälte**
**Partnerschaftsgesellschaft**
**Mollenbachstraße 37**
**71229 Leonberg (DE)**

(56) Entgegenhaltungen:
**DE-U1-202010 007 111     US-A- 4 245 211**
**US-A- 5 969 667**

• **ROTTMANN F ET AL: "ELEKTRONIKKONZEPT ERFUELLT OPTIKSENSORTRAEUME EIN- BIS DREIDIMENSIONALE OPTISCHE EINGABEEINHEITEN REALISIERBAR", ELEKTRONIK, IRL PRESS LIMITED, DE, Bd. 51, Nr. 22, 29. Oktober 2002 (2002-10-29), Seiten 64-69, XP001168347, ISSN: 0013-5658 in der Anmeldung erwähnt**

**Beschreibung**

Die Erfindung geht aus von einem Verfahren zum Betreiben eines Abstandssensors und von einer Vorrichtung zur Durchführung des Verfahrens nach der Gattung der unabhängigen Ansprüche.

**Stand der Technik**

In der Fachzeitschrift "Elektronik", Fachzeitschrift für industrielle Anwender und Entwickler, WEKA Fachmedien GmbH, Gruber Straße 46a, D-85586 Poing, Sonderdruck 22 vom 29. Oktober 2002 ist ein opto-elektronisches Abstandssensorprinzip beschrieben. Die von einer Sende-LED abgestrahlte optische Messstrahlung trifft auf ein Objekt, dessen Abstand von dem Abstandssensor gemessen werden soll, wird vom Objekt reflektiert und als Reflexionsstrahlung von einer Empfangsfotodiode empfangen. Zusätzlich zum Messstrahlungspfad ist ein Kompensationsstrahlungspfad vorhanden, bei welchem eine von einer Kompensations-LED abgestrahlte optische Strahlung direkt auf die Empfangsfotodiode trifft.

Die optische Strahlung der beiden Strahlungsquellen ist jeweils rechteckförmig moduliert, wobei die Modulation um 180° gegenphasig verschoben erfolgt. Das bedeutet, dass die beiden Sende-LEDs abwechselnd getaktet ein- und ausgeschaltet werden. Ein als Synchrongleichrichter geschalteter Demodulator ermittelt die beiden von der Empfangsfotodiode empfangenen Signale und stellt die Differenz zwischen den beiden Empfangssignalen einem Regler zur Verfügung, der eine Stellgröße ermittelt, mit der die Sendeleistung der Sende-LED und/oder der Kompensations-LED derart geregelt wird, dass die beiden Empfangssignale gleich groß werden. Im eingeregelten Zustand wird die Stellgröße zu null. Die Abstandsinformation wird durch eine Erfassung und Bewertung der transienten Regelvorgänge erhalten.

Die Anordnung ist unempfindlich gegenüber einer Änderung der Empfindlichkeit der Empfangsfotodiode, die in Abhängigkeit von der Bestrahlungsstärke variieren kann, gegenüber einer Drift des Verstärkungsfaktors des Verstärkers und gegenüber einer Wirkungsgradänderung der Sende- und Kompensations-LED sowie insgesamt gegenüber einer thermischen Drift der Anordnung.

Bekannt sind weiterhin Mikrowellen-Radarsensoren, welche mittels Mikrowellen eine Abstands- beziehungsweise Wegmessung ermöglichen. Die von einem Objekt reflektierten Mikrowellen werden empfangen und bewertet. Bewegungen des Objekts werden mit einem CW-Dopplerradar erfasst. Die Abstände können weiterhin mit einem Pulsradar oder einer FMCW-Anordnung erfasst werden.

Um von Amplituden unabhängig zu sein, wird bei CW (Continuous-Wave)-Anordnungen eine FM (Frequenzmodulation) eingesetzt, wobei aufgrund der Laufzeit eine Frequenzdifferenz zwischen dem abgestrahlten Mikrowellensignal und dem empfangenen Mikrowellensignal auftritt, welche zum Ermitteln des Abstands bewertet wird. Aufgrund gesetzlicher Vorschriften für die Auswahl des Frequenzbereichs der Mikrowellen und insbesondere für die zulässige Bandbreite des Modulationssignals bestehen Einschränkungen insbesondere bei der Modulationsfrequenz, die bei einer Sendefrequenz von beispielsweise 24 GHz maximal 250 MHz betragen darf. Damit liegt die Objekttrennbarkeit, das heißt, der minimale detektierbare Abstand zwischen zwei Zielobjekten (Targets) bei 60 cm. Sofern ein Pulsradar eingesetzt wird, ist der Messbereich im Hinblick auf die Begrenzung der Flankensteilheit ebenfalls nach unten begrenzt, weil der Empfangsimpuls erst empfangen werden darf, wenn der Sendeimpuls beendet ist. Aufgrund der Bandbreitenbegrenzung können die Impulsdauern beziehungsweise die Flankensteilheiten für kleine Abstände unterhalb des Meterbereichs nicht ausreichend klein gewählt werden.

Die Benutzung eines Übersprechsignals als Bezugssignal in einem Abstandssensor ist aus US 5,969,667 bekannt.

Der Erfindung liegt die Aufgabe zugrunde, ein Verfahren zum Betreiben eines Abstandssensors und Vorrichtungen zur Durchführung des Verfahrens anzugeben, die mit einfachen Mitteln für kurze Abstände auch unterhalb des Meterbereichs geeignet sind und unabhängig vom Messbereich eine hohe Messgenauigkeit ermöglichen.

Die Aufgabe wird durch die in den unabhängigen Ansprüchen angegebenen Merkmale jeweils gelöst.

**Offenbarung der Erfindung**

Das erfindungsgemäße Verfahren zum Betreiben eines Abstandssensors geht davon aus, dass ein Sendesignal als Sendestrahlung abgestrahlt wird, von einem Objekt, dessen Abstand gemessen werden soll, als Reflexionsstrahlung reflektiert und als Reflexionssignal empfangen wird. Das an einem Empfängereingang anliegende Reflexionssignal und ein ebenfalls am Empfängereingang auftretendes Bezugssignal werden auf ein vorgegebenes Verhältnis geregelt, wobei der Abstand während des Ausregelvorgangs ermittelt wird. Das erfindungsgemäße Verfahren sieht vor, dass als Sendestrahlung Mikrowellen eingesetzt werden und dass das Übersprechsignal vom Sendesignal direkt zum Empfängereingang bei unterdrückter Abstrahlung des Sendesignals als Bezugssignal gewertet wird.

Der erfindungsgemäße Abstandssensor ist unabhängig von einer Drift der Leistung eines im Abstandssensor eingesetzten Mikrowellensenders und von einer Drift eines erforderlichen Mikrowellenempfängers, da sich eine gegebenenfalls vorhandene Drift auf sämtliche Signale gleich auswirkt. Der wesentliche Vorteil liegt weiterhin darin, dass eine Bewertung einer absoluten Empfangsfeldstärke beziehungsweise einer Empfangssignalamplitude mit dem vorgesehenen Kompensationsverfahren entfällt.

Ein weiterer Vorteil ergibt sich dadurch, dass das Temperaturverhalten des erfindungsgemäßen Abstandssensors durch eine entsprechende Auslegung der Dämpfung des Übersprechsignals eingeprägt oder zumindest beeinflusst und daher kompensiert werden kann.

Mit dem erfindungsgemäßen Verfahren kann ein CW-Mikrowellensender (Continuous-Wave) vorgesehen werden, sodass ein sehr geringer Abstand gemessen werden kann. Durch Entfall einer Modulation des Sendesignals können Vorschriften betreffend Signalbandbreiten leicht eingehalten werden.

Das erfindungsgemäße Verfahren ermöglicht kurze Messzyklen bei gleichzeitig einer hohen Dynamik. Aufgrund der Regelung auf ein bestimmtes Verhältnis, die einem Kompensationsverfahren entspricht, werden gegebenenfalls auftretende Signalbeeinflussungen im Sendezweig und/oder Empfangszweig, beispielsweise durch die Temperatur, kompensiert und wirken sich nicht auf das Messergebnis aus.

Das erfindungsgemäße Verfahren ist ein rein energetisches Verfahren, das einfache Signalaufbereitung und Signalbewertung ermöglicht. Daher entfällt eine aufwendige Hardware und Software. Aufgrund der einfachen Realisierung kann ein geringer Energieverbrauch erzielt werden. Weiterhin kann das erfindungsgemäße Verfahren kostengünstig beispielsweise im Rahmen einer kompakten miniaturisierten Ausführung realisiert werden.

Vorteilhafte Weiterbildungen und Ausgestaltungen des erfindungsgemäßen Verfahrens sind Gegenstände der abhängigen Verfahrensansprüche.

Die erfindungsgemäßen Vorrichtungen sehen entweder wenigstens eine Sende-/Empfangsantenne oder wenigstens eine Sendeantenne und wenigstens eine von der Sendeantenne getrennte Empfangsantenne vor. Die erfindungsgemäßen Vorrichtungen zur Durchführung des Verfahrens ermöglichen damit eine flexible Anpassung an unterschiedliche Geometrien.

Ausführungsbeispiele der Erfindung sind in der Zeichnung dargestellt und in der nachfolgenden Beschreibung näher erläutert.

**Kurzbeschreibung der Figuren**

Figur 1 zeigt ein erstes Ausführungsbeispiel eines erfindungsgemäßen Abstandssensors mit einer Sende-/Empfangsantenne,
Figur 2 zeigt ein zweites Ausführungsbeispiel eines erfindungsgemäßen Abstandssensors mit einer Sendeantenne und einer getrennt von der Sendeantenne vorgesehenen Empfangsantenne und
Figuren 3a bis 3g zeigen Signalverläufe in Abhängigkeit von der Zeit t, die in einem erfindungsgemäßen Abstandssensor auftreten.

**Detaillierte Beschreibung der Ausführungsbeispiele**

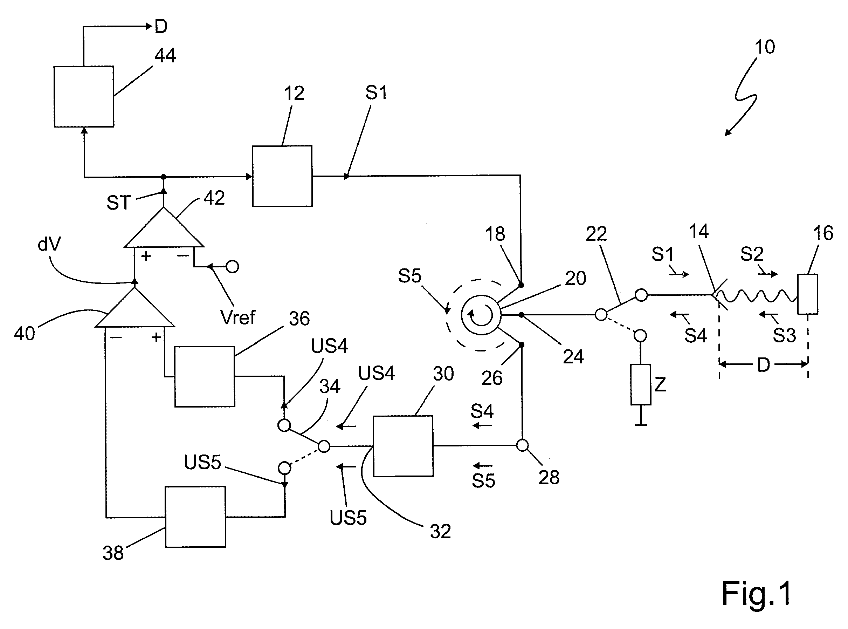

Figur 1 zeigt einen Abstandssensor 10, bei dem das von einem Mikrowellenoszillator 12 erzeugte Sendesignal S1 von einer Sende-/Empfangsantenne 14 als Sendestrahlung S2 abgestrahlt, an einem Objekt 16, dessen Abstand D vom Abstandssensor 10 gemessen werden soll, reflektiert und die vom Objekt 16 reflektierte Reflexionsstrahlung S3 von der Sende-/Empfangsantenne 14 empfangen wird.

Bei dem erfindungsgemäßen Abstandssensor 10 werden die Signaldämpfungen der Sendestrahlung S2 und der Reflexionsstrahlung S3 auf der Strecke zwischen der Sende-/Empfangsantenne 14 und dem Objekt 16 für die Bestimmung des Abstands D beziehungsweise des Wegs des Objekts 16 ausgewertet. Der Abstand D kann gemäß Figur 1 ausgehend von der Sende-/Empfangsantenne 14 gemessen werden.

Der das Sendesignal S1 bereitstellende Mikrowellenoszillator 12 ist an einem ersten Anschluss 18 eines Zirkulators 20 und die Sende-/Empfangsantenne 14 über einen ersten Umschalter 22 an einem zweiten Anschluss 24 des Zirkulators 20 angeschlossen. Das der Reflexionsstrahlung S3 entsprechende Reflexionssignal S4 gelangt über die Sende-/Empfangsantenne 14, den Umschalter 22 und über den zweiten Anschluss 24 des Zirkulators 20 an einen dritten Anschluss 26 des Zirkulators 20.

Der Zirkulator 20 ist vorzugsweise als ein passiver Zirkulator 20 realisiert. Der Zirkulator 20 trennt Signalrichtungen auf. Ein Signal, das an einem Eingang eingespeist wird, wird jeweils zum nächsten Anschluss weitergegeben. An einem offenen Anschluss wird das Signal unverändert weitergeleitet und an einem kurzgeschlossenen Anschluss wird das Vorzeichen der Signalspannung umgekehrt. Wenn der Anschluss impedanzrichtig abgeschlossen ist, wird das Signal nicht an den nächsten Anschluss weitergeleitet. Die Signale werden gewissermaßen im Kreis weitergeleitet.

Beim gezeigten Ausführungsbeispiel wird das am ersten Anschluss 18 anliegende Sendesignal S1 bei der gezeigten Position des ersten Umschalters 22 an die Sende-/Empfangsantenne 14 geleitet und unter der Voraussetzung einer impedanzrichtigen Anpassung der Sende-/Empfangsantenne 14 vollständig als Sendestrahlung S2 abgestrahlt. Die vom Objekt 16 reflektierte Reflexionsstrahlung S3 wird von der Sende-/Empfangsantenne 14 als Reflexionssignal S4 über den ersten Umschalter 22 und über den zweiten Anschluss 24 des Zirkulators 20 an den dritten Anschluss des Zirkulators 26 weitergeleitet. Das Reflexionssignal S4 liegt an einem Empfängereingang 28 des Abstandssensors 10 an, der mit dem dritten Anschluss 26 des Zirkulators 20 verbunden ist.

Ein idealer Zirkulator würde bei exakter Anpassung an den Wellenwiderstand eine unendlich hohe Übersprechdämpfung zwischen dem ersten Anschluss 18 und dem dritten Anschluss 26 aufweisen. Der reale Zirkulator 20 weist jedoch eine endliche Übersprechdämpfung auf, die bekannt ist und beispielsweise 20 dB beträgt. Bedingt durch die endliche Übersprechdämpfung vom ersten Anschluss 18 zum dritten Anschluss 26 tritt ein Übersprechsignal S5 auf, das in Figur 1 strichliniert eingetragen ist. Das Übersprechsignal S5 gelangt ohne Abstrahlung direkt an den Empfängereingang 28.

Erfindungsgemäß wird das Übersprechsignal S5 vom Sendesignal S1 direkt zum Empfängereingang 28 als Bezugssignal herangezogen.

Gemäß Figur 1 soll der erste Umschalter 22 in einer ersten Betriebsphase BP1 des Abstandssensors 10 in der gezeigten Position stehen, bei welcher der zweite Anschluss 24 des Zirkulators 20 mit der Sende-/Empfangsantenne 14 verbunden ist. In der ersten Betriebsphase BP1 liegen daher am Empfängereingang 28 gleichzeitig das Reflexionssignal S4 und das Übersprechsignal S5 an, wobei die Amplitude des Reflexionssignals S4 erheblich höher als die des Übersprechsignals S5 ist, sodass die in der ersten Betriebsphase BP1 auftretende Überlagerung des Reflexionssignals S4 mit dem Übersprechsignal S5 am Empfängereingang 28 dadurch angenähert wird, dass das Übersprechsignal S5 vernachlässigt wird.

In einer zweiten Betriebsphase BP2 des Abstandssensors 10 befindet sich der erste Umschalter 22 in der anderen Position, bei welcher der zweite Anschluss 24 des Zirkulators 20 mit einer Impedanz Z verbunden ist, die als ohmscher Widerstand realisiert ist, dessen Wert möglichst genau dem Wellenwiderstand der Anordnung entspricht und beispielsweise 50 Ohm beträgt.

In der zweiten Betriebsphase BP2 wird daher das Sendesignal S1 in der Impedanz Z absorbiert und nicht über die Sende/Empfangsantenne 14 abgestrahlt. Dennoch liegt das gedämpfte Sendesignal S1 am dritten Anschluss 26 des Zirkulators 20 aufgrund der endlichen Übersprechdämpfung als das Übersprechsignal S5 an. Am Empfängereingang 28 liegt in der zweiten Betriebsphase BP2 daher nur das Übersprechsignal S5 an, das erfindungsgemäß als Bezugssignal gewertet wird.

Das Reflexionssignal S4 und das Übersprechsignal S5 gelangen in einen Empfänger 30, der die Signale S4, S5 aufbereitet und demoduliert. Am Empfängerausgang 32 treten in der ersten Betriebsphase BP1 eine erste Gleichspannung US4, die unter Vernachlässigung des Übersprechsignals S5 ein Maß für das Reflexionssignal S4 ist, und in der zweiten Betriebsphase BP2 eine zweite Gleichspannung US5 auf, die ein Maß für nur das dem Übersprechsignal S5 entsprechenden Bezugssignal ist.

Der Empfänger 30 enthält zur Aufbereitung der Eingangssignale S4, S5 beispielsweise einen Mischer zur Umsetzung der Mikrowellen, deren Frequenz beispielsweise bei 24 GHz liegt, in einen niedrigeren, signaltechnisch leichter handhabbaren Frequenzbereich. Diese Umsetzung in einen Zwischenfrequenzbereich erfolgt in bekannter Weise durch eine Mischung der Mikrowellen mit einer Oszillatorfrequenz, die um den Betrag der gewünschten Zwischenfrequenz von der Frequenz des Sendesignals S1 abweicht.

Der Ausgang 32 des Empfängers 30 ist in der ersten Betriebsphase BP1 über einen zweiten Umschalter 34 mit einer ersten Sample- and Holdschaltung 36 und in der zweiten Betriebsphase BP2 mit einer zweiten Sample- and Holdschaltung 38 verbunden. Dementsprechend speichert die erste Sampleand Holdschaltung 36 die erste dem Reflexionssignal S4 entsprechende Gleichspannung US4 und die zweite Sample- and Holdschaltung 38 die dem Übersprechsignal S5 beziehungsweise dem Bezugssignal entsprechende Gleichspannung US5.

Die beiden Gleichspannungen US4, US5 gelangen in einen Differenzverstärker 40, der als Ausgangssignal die Differenzspannung dV zur Verfügung stellt, die in einem nachgeschalteten Komparator 42 mit einer Referenzspannung Vref verglichen wird. Die Differenzspannung dV hängt von der Übersprechdämpfung sowie von der Dämpfung der Sendestrahlung S2 beziehungsweise der Reflexionsstrahlung S3 ab, wobei der Zusammenhang in einer Logarithmusfunktion enthalten ist.

Das Ausgangssignal des Komparators 42 kann als Stellgröße ST bezeichnet werden, mit deren Hilfe die Leistung des Sendesignals S1 beeinflusst wird, wobei die Leistung erhöht oder abgesenkt werden kann. Die Stellgröße ST kann beispielsweise in den Verstärkungsfaktor einer Endstufe des Mikrowellensenders 12 und/oder in eine variable Signaldämpfung am Ausgang des Mikrowellensenders 12 eingreifen. Bei dem Regeleingriff kann derart vorgegangen werden, dass in der ersten Betriebsphase BP1 und/oder in der zweiten Betriebsphase BP2 in die Leistung eingegriffen wird. Insbesondere bei einem Eingriff in der zweiten Betriebsphase BP2 kann die Sendeleistung erhöht werden, sodass im Empfänger 30 eine geringere Signaldynamik bewältigt werden muss.

Ziel des Eingriffs mit dem Stellsignal ST ist es, das Verhältnis zwischen dem Reflexionssignal S4 und dem Übersprechsignal S5 auf einen vorgegebenen Wert einzuregeln. Die Einstellung kann mit dem Referenzsignal Vref erfolgen, das beispielsweise auch null sein kann, sodass im eingeregelten Zustand das Reflexionssignal S4 und das Bezugssignal S5 betragsmäßig gleich groß werden.

Damit wird der Abstandssensor 10 unabhängig von einer Drift der Leistung des Mikrowellensenders 12 und von einer Drift im Empfänger 30, da sich eine gegebenenfalls vorhandene Drift auf beide Signale S4, S5 auswirkt. Ein wesentlicher Vorteil liegt weiterhin darin, dass eine Bewertung einer absoluten Empfangsfeldstärke beziehungsweise einer Empfangssignalamplitude mit dem vorgesehenen Kompensationsverfahren entfällt. Damit kann insgesamt eine hohe Genauigkeit erreicht werden.

Der Mikrowellensender 12 wird im CW-Betrieb mit konstanter Frequenz betrieben. Der erzielbare minimal messbare Abstand D wird nicht durch Impulslaufzeiten oder begrenzte Frequenzmodulationshübe begrenzt und kann zumindest theoretisch bis zum Abstand null herabreichen.

Die Information über den Abstand D des Objekts 16 von der Sende-/Empfangsantenne 14 steckt in der Differenzspannung dV, die transient während des Ausregelvorgangs auftritt. Die Differenzspannung dV wird einer Abstandsermittlung 44 zur Verfügung gestellt, die aus der transient auftretende Differenzspannung dV den Abstand D ermittelt. Bewertet werden können die maximale Amplitude zu Beginn des Ausregelvorgangs und/oder die Reaktionszeit beziehungsweise die Signalflanken, wenn sich der Abstand D des Objekts 16 beim Annähern oder Entfernen ändert. Der Zusammenhang wird vorzugsweise in einem Lernverfahren ermittelt und in einem Speicher für den nachfolgenden Betrieb des Abstandssensors 10 gespeichert. Die Abstandsermittlung 44 stellt den Abstand D an einem Ausgang zur Verfügung.

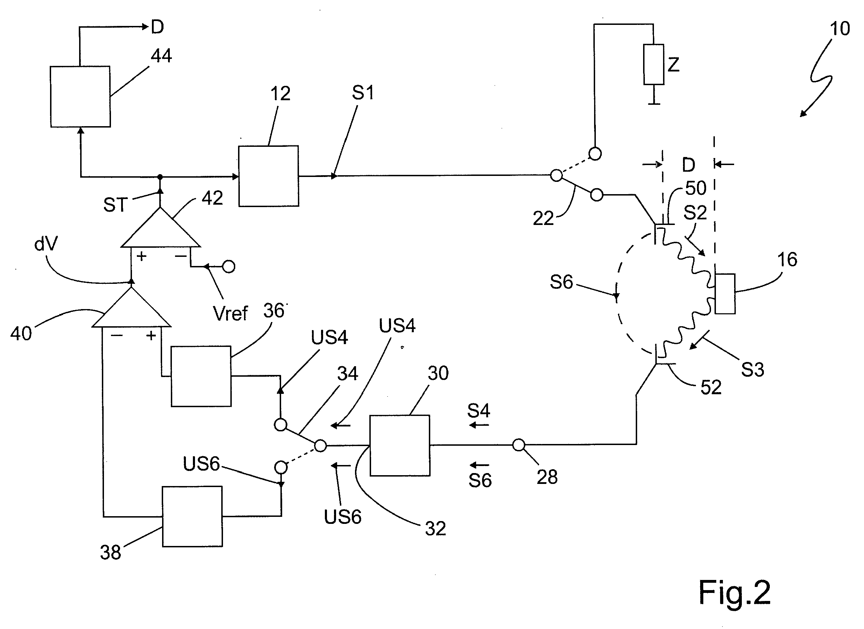

Figur 2 zeigt eine alternative Realisierungsmöglichkeit des erfindungsgemäßen Abstandssensors 10. Diejenigen in Figur 2 gezeigten Teile, die mit den in Figur 1 gezeigten übereinstimmen, sind jeweils mit denselben Bezugszeichen bezeichnet.

Bei dem in Figur 2 gezeigten Ausführungsbeispiel entfällt der Zirkulator 20. Vorhanden ist eine Sendeantenne 50 und eine getrennt von der Sendeantenne 50 vorgesehene Empfangsantenne 52. Auch in diesem Ausführungsbeispiel trifft die von der Sendeantenne 50 abgestrahlte Sendestrahlung S2 auf das Objekt 16, dessen Abstand D vom Abstandssensor 10 gemessen werden soll. Die vom Objekt 16 reflektierte Reflexionsstrahlung S3 wird von der Empfangsantenne 52 empfangen und tritt am Empfängereingang 28 als Reflexionssignal S4 auf.

Auch bei diesem Ausführungsbeispiel tritt ein Übersprechsignal S6 auf, das als Bezugssignal gewertet werden kann. Das Übersprechsignal S6 tritt von der Sendeantenne 50 zur Empfangsantenne 52 auf. In Figur 2 ist das Übersprechsignal S6 wieder strichliniert eintragen.

Die Signalverarbeitung unterscheidet sich nicht von derjenigen des in Figur 1 gezeigten Ausführungsbeispiels mit wenigstens einer Sende-/Empfangs-antenne 14. Während die Übersprechdämpfung bei einem Zirkulator 20 beispielsweise 20 dB beträgt, muss bei dem Ausführungsbeispiel gemäß Figur 2 mit einer höheren Übersprechdämpfung im Bereich von beispielsweise bis 100 dB gerechnet werden. Das Übersprechsignal S6 zwischen der Sendeantenne 50 und der Empfangsantenne 52 tritt am Empfängereingang 28 auf und wird vom Empfänger 30 in eine entsprechende Gleichspannung US6 umgesetzt, die in der zweiten Betriebsphase BP2 über den zweiten Umschalter 34 der zweiten Sample- and Holdschaltung 38 zur Speicherung zur Verfügung gestellt wird.

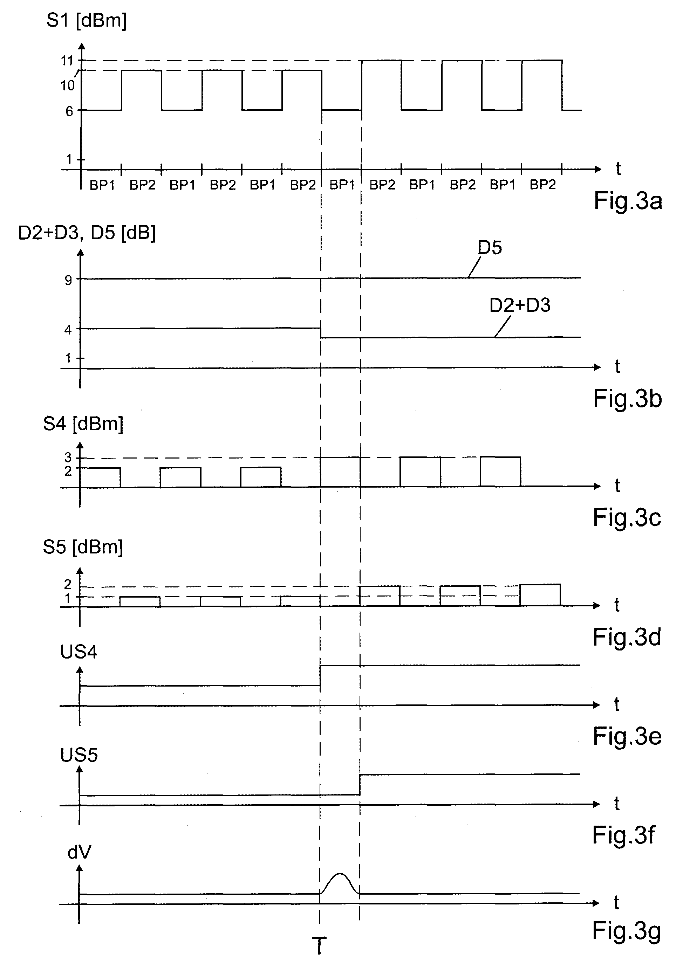

Die Figuren 3a bis 3g zeigen Signalverläufe in Abhängigkeit von der Zeit t. Figur 3a zeigt den im ersten Ausführungsbeispiel des erfindungsgemäßen Abstandssensors 10 auftretenden Sendepegel in dBm des Sendesignals S1 während der beiden Betriebsphasen BP1, BP2. Im gezeigten Ausführungsbeispiel wird im Hinblick darauf, dass das Übersprechsignal S5 stärker gedämpft wird als das Reflexionssignal S4 davon ausgegangen, dass in der ersten Betriebsphase BP1 ein geringerer Sendepegel von beispielsweise 6 dBm und in der zweiten Betriebsphase BP2 ein höherer Sendepegel von beispielsweise 10 dBm bereitgestellt wird, der sich ab einem Zeitpunkt T auf 11 dBm erhöht. Zum Zeitpunkt T wird eine Annäherung des Objekts 16 angenommen, sodass nach dem Zeitpunkt ein geringerer Abstand D gemessen wird als vor dem Zeitpunkt T.

Figur 3b zeigt die Signaldämpfung D5 des Übersprechsignals S5 und die Summe der Signaldämpfungen D2+D3, denen die Sendestrahlung S2 und die Reflexionsstrahlung S3 unterworfen ist, wobei die Signaldämpfung D5 des Übersprechsignals S5 - wie bereits erwähnt - mit beispielsweise 9 dB höher liegen soll als Summe der Signaldämpfungen D2+D3 der Strahlungssignale S2, S3, die zunächst mit 4 dB und ab dem Zeitpunkt T mit 3 dB angenommen wird.

Figur 3c zeigt den Empfangspegel in dBm des Empfangssignals S4, der bei 2 dBm liegt, wobei sich der Empfangspegel von 2 dBm aus dem Sendepegel 6 dBm des Sendesignals S1 abzüglich der Summe der Signaldämpfungen D2+D3 der Strahlungssignale S2, S3 von 4 dB ergibt. Ab dem Zeitpunkt T steigt aufgrund der Annäherung des Objekts 16 der Signalpegel des Empfangssignals S4 auf 3 dBm an.

Figur 3d zeigt den Übersprechpegel in dBm des Übersprechsignals S5, der bei 1 dBm liegt, wobei sich der Übersprechpegel von 1 dBm aus dem Sendepegel 10 dBm des Sendesignals S1 abzüglich der Signaldämpfung D5 des Übersprechsignals S5 von 9 dB ergibt. Ab dem Zeitpunkt T steigt aufgrund der Erhöhung des Sendepegels um 1 dBm der Übersprechpegel des Übersprechsignals S5 entsprechend auf 2 dBm an.

Figur 3e zeigt die dem Reflexionssignal S4 entsprechende Gleichspannung US4, die zum Zeitpunkt T aufgrund der Annäherung des Objekts 16 und der dadurch bedingten geringeren Dämpfungen D2+D3 der Strahlungssignale S2, S3 auf einen höheren Pegel ansteigt.

In Figur 3f ist die dem Übersprechsignal S5 entsprechende Gleichspannung US5 dargestellt, die nach dem Zeitpunkt T aufgrund der Ausregelung der Differenzspannung dV ebenfalls ansteigt.

Figur 3g zeigt den Ausregelvorgang der Differenzspannung dV, die mit dem Zeitpunkt T beginnt und gemäß dem Ausführungsbeispiel bereits in der folgenden zweiten Betriebsphase BP2 abgeschlossen sein soll.

Wie bereits beschrieben, können die maximale Amplitude beim Ausregelvorgang und/oder die Reaktionszeit beziehungsweise die Signalflanken zur Ermittlung des Abstands D des Objekts 16 bewertet werden.

Bei den in den Figuren 3a bis 3g gezeigten Signalverläufen in Abhängigkeit von der Zeit t wurde vom ersten Ausführungsbeispiel des erfindungsgemäßen Abstandssensors 10 ausgegangen, der eine einzige Antenne 14 aufweist, die als Sende-/Empfangsantenne betrieben wird. Die Signaldämpfung D5 des Übersprechsignals S5 ist vergleichsweise geringer als die in den Figuren 3a bis 3f nicht gezeigte Signaldämpfung D6, die bei dem Ausführungsbeispiel des erfindungsgemäßen Abstandssensors 10 auftritt, der eine Sendeantenne 50 und eine separate Empfangsantenne 52 aufweist. In diesem Fall müsste der Sendepegel des Sendesignals S1 während der zweiten Betriebsphase BP2 entsprechend höher liegen. Zusätzlich oder alternativ kann durch eine Änderung der Referenzspannung Vref auf eine höhere Differenzspannung dV geregelt werden.

Im Folgenden ist ein numerisches Beispiel wiedergegeben, anhand dem die Zusammenhänge veranschaulicht werden.

Angenommen wird eine Sendeleistung Pout von 4 dBm. Damit ergibt sich eine Sendeleistung von 2,5 mW entsprechend 500 mV an 50 Ohm.

Die Luftdämpfung DL der Sendestrahlung S2 und der Reflexionsstrahlung S3 auf dem Weg von der Sende-/Empfangsantenne 14 beziehungsweise der Sendeantenne 50 zum Objekt 16 und vom Objekt zurück zur Sende-/Empfangsantenne 14 beziehungsweise Empfangsantenne 52 kann beschrieben werden durch:

$$DL = 10 \log (Pout/Pin) = 10 \log (1/ D^3)$$

wobei Pin die Eingangsleistung am Empfängereingang 28 ist. Bei einem Abstand D = 2 m beträgt die Luftdämpfung DL = - 6 dB.

Bei einer angenommenen Dämpfung DRK des Übersprechsignals S5 im Zirkulator 20 von - 20 dB beträgt die Leistung Pref des Bezugssignals S5:

$$Pref = Pout - DRK = 4 \text{ dBm} - 20 \text{ dB} = -16 \text{ dBm}$$

Pref = 0,025 mW, entsprechend einer Eingangsspannung Uref am Empfängereingang 28 von 50 mV an 50 Ohm.

Die Eingangsleistung Pin ergibt sich zu:

$$Pin = Pout - DL = 4 \text{ dBm} - 6 \text{ dB} = - 2 \text{ dBm}$$

Pin = 0,63 mW entsprechend einer Eingangsspannung Uin am Empfängereingang 28 von 250 mV an 50 Ohm.

Bei einer Änderung des Abstands D des Objekts 16 tritt eine Differenzspannung dV auf:

$$dV = Uin - Uref$$

$$dV= 10 \text{ SQRT } (Pin) - 10 \text{ SQRT } (Pref)$$

$$dV = 10 [\text{SQRT } (Pin) - \text{SQRT } (Pref)]$$

$$\log dV = \log 10 + \log [\text{SQRT } (Pin/Pref)]$$

$$\log dV = \log 10 + \log [SQRT (10 \exp \{(Pin - Pref)/10\})]$$

$$\log dV = \log 10 + \log [SQRT (10 \exp \{(Pout - DL - Pout + DRK)/10\})]$$

$$\log dV = \log 10 + \log [SQRT (10 \exp \{(DRK - DL)/10\})]$$

Das bedeutet, dass bei bekannter Dämpfung des Übersprechsignals S5 im Zirkulator 20 die Differenzspannung dV nur eine Funktion der Luftdämpfung DL und somit des Abstands D des Objekts 16 ist.

**Patentansprüche**

1. Verfahren zum Betreiben eines Abstandssensors (10), bei dem ein Sendesignal (S1) als Sendestrahlung (S2) abgestrahlt wird, von einem Objekt (16), dessen Abstand (D) gemessen werden soll, als Reflexionsstrahlung (S3) reflektiert und als Reflexionssignal (S4) empfangen wird, bei dem das an einem Empfängereingang (28) anliegende Reflexionssignal (S4) und ein ebenfalls am Empfängereingang (28) auftretendes Bezugssignal auf ein vorgegebenes Verhältnis geregelt werden, wobei der Abstand (D) während des Ausregelvorgangs ermittelt wird, wobei als Sendestrahlung (S2) Mikrowellen eingesetzt werden, wobei das Über-sprechsignal (S5, S6) vom Sendesignal (S1) direkt zum Empfängereingang (28) bei unterdrückter Abstrahlung des Sendesignals (S1) als Bezugssignal gewertet wird, wobei in einer ersten Betriebsphase (BP1) das Sendesignals (S1) als Sendestrahlung (S2) abgestrahlt sowie die am Objekt (16) reflektierte Reflexionsstrahlung (S3) als Reflexionssignal (S4) empfangen werden, wobei in einer zweiten Betriebsphase (BP2) die Abstrahlung des Sendesignals (S1) unterdrückt sowie das Übersprechsignal (S5, S6) als Bezugssignal gewertet werden und wobei das in der ersten Betriebsphase (BP1) am Empfängereingang (28) auftretende Reflexionssignal (S4) und das in der zweiten Betriebsphase (BP2) anliegende Bezugssignal gespeichert und die gespeicherten Signale (US4, US5; US4, US6) in Bezug zueinander gesetzt werden, **dadurch gekennzeichnet, dass** der Bezug dadurch hergestellt wird, dass die Signaldifferenz (dV) gebildet wird und dass zur Ausregelung die Signaldifferenz (dV) mit einem einstellbaren Referenzsignal (Vref) verglichen wird und dass die Leistung des Sendesignals (S1) geregelt wird.

2. Verfahren nach Anspruch 1 **dadurch gekennzeichnet, dass** der Betrag des Referenzsignals (Vref) vorzugsweise auf null festgelegt wird.

3. Verfahren nach Anspruch 1, **dadurch gekennzeichnet, dass** die Leistung des in der ersten Betriebsphase (BP1) oder in der zweiten Betriebsphase (BP2) bereitgestellten Sendesignals (S1) nachgeregelt wird.

4. Verfahren nach Anspruch 1, **dadurch gekennzeichnet, dass** aus der Signaldifferenz (dV) während der Ausregelung der Leistung des Sendesignals (S1) der Abstand (D) des Objekts ermittelt wird.

5. Verfahren nach Anspruch 1, **dadurch gekennzeichnet, dass** als Sendesignal (S1) ein CW-Mikrowellensignal verwendet wird.

6. Vorrichtung zur Durchführung des Verfahrens nach einem der vorhergehenden Ansprüche, wobei wenigstens eine Sendeantenne (50) und wenigstens eine von der Sendeantenne (50) getrennte Empfangsantenne (52) vorgesehen sind, wobei das Übersprechsignal (S6) zwischen der wenigstens einen Sendeantenne (50) und der wenigstens einen Empfangsantenne (52) auftritt, **dadurch gekennzeichnet, dass** eine Impedanz (Z) mit dem Wellenwiderstand vorgesehen ist, mit dem der Mikrowellensender (12) in der zweiten Betriebsphase (BP2) anstelle mit der wenigstens einen Sendeantenne (50) oder der wenigstens einen Sende/Empfangsantenne (14) zur Unterdrückung der Abstrahlung des Sendesignals (S1) verbunden ist.

7. Vorrichtung zur Durchführung des Verfahrens nach einem der Ansprüche 1 bis 6, wobei wenigstens eine Sende-/Empfangsantenne (14) vorgesehen ist, die gleichzeitig als Sendeantenne und als Empfangsantenne eingesetzt ist, wobei ein Zirkulator (20) vorgesehen ist, an welchem an einem ersten Anschluss (18) ein Mikrowellensender (12), an einem zweiten Anschluss (24) die wenigstens eine Sende/Empfangsantenne (14) und an einem dritten Anschluss (26) der Empfängereingang (28) eines Empfängers (30) angeschlossen ist, wobei das Übersprechsignal (S5) zwischen dem ersten und dem dritten Anschluss (18, 26) des Zirkulators (20) auftritt, **dadurch gekennzeichnet, dass** eine Impedanz (Z) mit dem Wellenwiderstand vorgesehen ist, mit dem der Mikrowellensender (12) in der zweiten Betriebsphase (BP2) anstelle mit der wenigstens einen Sendeantenne (50) oder der wenigstens einen Sende/Empfangsantenne (14) zur Unterdrückung der Abstrahlung des Sendesignals (S1) verbunden ist.

8. Vorrichtung nach Anspruch 6 oder 7, **dadurch gekennzeichnet, dass** Sample- and Holdschaltungen (36, 38) zur Speicherung des empfangenen Reflexionssignals (S4) und des als Bezugssignal gewerteten Übersprechsignals (S5, S6) vorgesehen sind.

## Claims

1. Method for operating a distance sensor (10), wherein a transmission signal (S1) is emitted as transmission radiation (S2), from an object (16), the spacing (D) of which is to be measured, is reflected as reflection radiation (S3) and received as a reflection signal (S4), wherein the reflection signal (S4) is applied to a receiver input (28) and a reference signal also occurring on the receiver input (28) are regulated to a predetermined ratio, wherein the spacing (D) is determined during the adjustment process, wherein microwaves are used as transmission radiation (S2), wherein the crosstalk signal (S5, S6) is classified as a reference signal from the transmission signal (S1) directly to the receiver input (28) in the event of suppressed emission of the transmission signal (S1), wherein, in a first operating phase (BP1), the transmission signal (S1) is emitted as transmission radiation (S2) and the reflection radiation (S3) reflected on the object (16) is received as a reflection signal (S4), wherein, in a second operating phase (BP2), the emission of the transmission signal (S1) is suppressed and the crosstalk signal (S5, S6) is classified as a reference signal and wherein the reflection signal (S4) occurring on the receiver input (28) in the first operating phase (BP1) and the applied reference signal in the second operating phase (BP2) are saved and the saved signals (US4, US5; US4, US6) are put in relation to one another, **characterised in that** the reference is produced in such a way that the signal difference (dV) is formed and the signal difference (dV) is compared with an adjustable reference signal (Vref) for adjustment and the power of the transmission signal (S1) is regulated.

2. Method according to claim 1, **characterised in that** the value of the reference signal (Vref) is preferably set to zero.

3. Method according to claim 1, **characterised in that** the power of the transmission signal (S1) provided in the first operating phase (BP1) or in the second operating phase (BP2) is readjusted.

4. Method according to claim 1, **characterised in that** the distance (D) of the object is determined by the signal difference (dV) during adjustment of the power of the transmission signal (S1).

5. Method according to claim 1, **characterised in that** a CW microwave signal is used as the transmission signal (S1).

6. Device for carrying out the method according to one of the preceding claims, wherein at least one transmitting antenna (50) and at least one receiving antenna (52) which is separated from the transmitting antenna (50) are provided, wherein the crosstalk signal (S6) occurs between the at least one transmitting antenna (50) and the at least one receiving antenna (52), **characterised in that** an impedance (Z) is provided with the characteristic impedance to which the microwave transmitter (12) is connected in the second operating phase (BP2) instead of to the at least one transmitting antenna (50) or the at least one transmitting/receiving antenna (14) for suppressing the emission of the transmission signal (S1).

7. Device for carrying out the method according to one of claims 1 to 5, wherein at least one transmitting/receiving antenna (14) is provided which is used as a transmitting antenna and as a receiving antenna simultaneously, wherein a circulator (20) is provided, to which a microwave transmitter (12) is connected at a first connection (18), the at least one transmitting/receiving antenna (14) is connected at a second connection (24) and the receiver input (28) of a receiver (30) is connected at a third connection (26), wherein the crosstalk signal (S5) occurs between the first and third connection (18, 26) of the circulator (20), **characterised in that** an impedance (Z) is provided with the characteristic impedance to which the microwave transmitted (12) is connected in the second operating phase (BP2) instead of to the at last one transmitting antenna (50) or the at least one transmitting/receiving antenna (14) for suppressing the emission of the transmission signal (S1).

8. Device according to claim 6 or 7, **characterised in that** sample and hold circuits (36, 38) are provided to store the received reflection signal (S4) and the crosstalk signal (S5, S6) classified as a reference signal.

**Revendications**

1. Procédé permettant de faire fonctionner un capteur de distance (10) selon lequel un signal d'émission (S1) est diffusé en tant que rayonnement d'émission (S2) est réfléchi par un objet (16) dont la distance (D) doit être mesurée, en tant que rayonnement de réflexion (S3) et est reçu en tant que signal de réflexion (S4), le signal de réflexion (S4) présent à une entrée de récepteur (28) et un signal de rapport se présentant également à l'entrée de récepteur (28) sont réglés sur un rapport prédéfini, la distance (D) est déterminée pendant le processus de réglage, en tant que rayonnement d'émission (S2) on utilise des microondes, le signal de diaphonie (S5, S6) se propageant du signal d'émission (S1) directement à l'entrée de récepteur (28) est considéré comme signal de rapport lors d'une diffusion atténuée du signal d'émission (S1), dans une première phase de fonctionnement (BP1) le signal d'émission (S1) est diffusé en tant que rayonnement d'émission (S2) et le signal de réflexion (S3) réfléchi sur l'objet (16) est reçu en tant que signal de réflexion (S4), dans une seconde phase de fonctionnement (BP2) la diffusion du signal d'émission (S1) est atténuée et le signal de diaphonie (S5, S6) est considéré comme signal de rapport, et, le signal de réflexion (S4) présent à l'entrée de récepteur (28) dans la première phase de fonctionnement (BP1) et le signal de rapport se présentant dans la seconde phase de fonctionnement (BP2) sont mis en mémoire et les signaux mis en mémoire (US4, US5, US4, US6) sont mis en rapport entre eux,
   **caractérisé en ce que**
   le rapport est obtenu en formant la différentielle de signal (dV), et, pour effectuer le réglage de la différentielle de signal (dV) est comparée à un signal de référence réglable (Vref) et la puissance du signal d'émission (S1) est réglée.

2. Procédé conforme à la revendication 1,
   **caractérisé en ce que**
   la valeur du signal de référence (Vref) est de préférence fixée à zéro.

3. Procédé conforme à la revendication 1,
   **caractérisé en ce que**
   la puissance du signal d'émission (S1) fourni dans la première phase de fonctionnement (BP1) ou dans la seconde phase de fonctionnement (BP2) est à nouveau régalée.

4. Procédé conforme à à revendication 1,
   **caractérisé en ce que**
   la distance (D) de l'objet est déterminée à partir de la différentielle de signal (dV) pendant le réglage de la puissance du signal d'émission (S1).

5. Procédé conforme à la revendication 1,
   **caractérisé en ce que**
   en tant que signal d'émission (S1) on utilise un signal de microondes fonctionnant en régime continu.

6. Dispositif permettant la mise en oeuvre du procédé conforme à l'une des revendications précédentes, dans lequel il est prévu au moins une antenne d'émission (50) et au moins une antenne de réception (52) distincte l'antenne d'émission (50), le signal de diaphonie (S6) se présentant entre l'antenne d'émission (50) et l'antenne de réception (52),
   **caractérisé en ce qu'**
   il est prévu une impédance (Z) avec l'impédance d'onde, avec laquelle l'émetteur de microondes (12) est relié dans la seconde phase de fonctionnement (BP2) à la place de l'antenne d'émission (50) ou de l'antenne d'émission / réception (14) pour atténuer la diffusion du signal d'émission (S1).

7. Dispositif permettant la mise en oeuvre du procédé conforme à l'une des revendications 1 à 5, dans lequel il est prévu au moins une antenne d'émission / réception (14) utilisée simultanément en tant qu'antenne d'émission et en tant qu'antenne de réception, ainsi qu'un circulateur (20) sur lequel est branché, sur une première borne de connexion (18), un émetteur de microondes (12), sur une seconde borne de connexion (24) l'antenne d'émission / réception (14) et sur une troisième borne de connexion (26) l'entrée de récepteur (28) d'un récepteur (30), le signal de diaphonie (S5) se présentant entre la première et la troisième borne de connexion (18, 26) du circulateur (20),

**caractérisé en ce qu'**

il est prévu une impédance (Z) avec l'impédance d'onde, avec laquelle, pour permettre d'atténuer la diffusion du signal d'émission (S1) l'émetteur de microondes (12) est relié dans la seconde phase de fonctionnement (BP2) à à place de l'antenne d'émission (50) ou de l'antenne d'émission / réception (14).

8. Dispositif conforme à l'une des revendications 6 et 7,
**caractérisé en ce qu'**

il est prévu des circuits échantillonneurs-bloquers (36, 38) pour permettre la mise en mémoire du signal de réflexion reçu (S4) et du signal de diaphonie (S5, S6) considéré en tant que signal de rapport.

Fig.1

Fig.2

EP 2 699 938 B1

Fig.3a

Fig.3b

Fig.3c

Fig.3d

Fig.3e

Fig.3f

Fig.3g

**IN DER BESCHREIBUNG AUFGEFÜHRTE DOKUMENTE**

**In der Beschreibung aufgeführte Patentdokumente**

- US 5969667 A

**In der Beschreibung aufgeführte Nicht-Patentliteratur**

- Elektronik. Fachzeitschrift für industrielle Anwender und Entwickler. WEKA Fachmedien GmbH, 09. Oktober 2002, vol. 46a, 85586